(19) Europäisches Patentamt
European Patent Office
Office européen des brevets

(11) Publication number: **0 081 301**
**B1**

(12) # EUROPEAN PATENT SPECIFICATION

(45) Date of publication of patent specification: **28.08.85**

(51) Int. Cl.⁴: **B 01 D 53/14**

(21) Application number: **82306015.7**

(22) Date of filing: **11.11.82**

(54) **A sterically hindered amino acid promoted acid gas scrubbing process.**

(30) Priority: **13.11.81 US 321061**
**13.11.81 US 321063**

(43) Date of publication of application:
**15.06.83 Bulletin 83/24**

(45) Publication of the grant of the patent:
**28.08.85 Bulletin 85/35**

(84) Designated Contracting States:
**DE FR GB IT NL**

(56) References cited:
**DE-A-2 123 773**
**US-A-4 094 957**
**US-A-4 217 238**

(73) Proprietor: **Exxon Research and Engineering Company**
**P.O.Box 390 180 Park Avenue**
**Florham Park New Jersey 07932 (US)**

(72) Inventor: **Sartori, Guido**
**25 West Price Street**
**Linden New Jersey (US)**
Inventor: **Thaler, Warren Alan**
**133 Deerfield Lane**
**Aberdeen New Jersey (US)**

(74) Representative: **Field, Roger Norton et al**
**ESSO Engineering (Europe) Ltd. Patents & Licences Apex Tower High Street**
**New Malden Surrey KT3 4DJ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**EP 0 081 301 B1**

Courier Press, Leamington Spa, England.

**Description**

The present invention relates to the use of (a) N-secondary butyl glycine, or (b) mixtures of sterically hindered monosubstituted amino acids and tertiary amino acids derived from glycine or alanine as copromoters for alkaline salts in "hot pot" type acid gas scrubbing processes.

Recently, it was shown in U.S. Patent No. 4,112,050 that sterically hindered amines are superior to diethanolamine (DEA) as promoters for alkaline salts in the "hot pot" acid gas scrubbing process. U.S. Patent No. 4,094,957 describes an improvement to this process whereby amino acids, especially sterically hindered amino acids, serve to prevent phase separation of the aqueous solution containing sterically hindered amines at high temperatures and low fractional conversions during the acid gas scrubbing process.

One of the preferred sterically hindered amines described in these patents is N-cyclohexyl 1,3-propanediamine. The bulky cyclohexane ring on this diamino compound provides steric hindrance to the carbamate formed at this site thereby favoring the expulsion of $CO_2$ during regeneration, thereby leaving the hindered amine group free to protonate. The primary amino group of this diamino compound assists in maintaining solubility under lean conditions. Under lean conditions when there is insufficient carbonic acid present to protonate the hindered amino group, the molecule would be insoluble were it not for the primary amino group which forms a stable polar carbamate ion. However, even the carbamated primary amino group is insufficient to prevent insolubility of the compound under very lean conditions and an additional additive, as proposed in U.S. Patent No. 4,094,957, an amino acid, is required to maintain solubility of the diamino compound. This amino acid also contributes to additional capacity and faster absorption rates for carbon dioxide, so it therefore acts as a copromoter in addition to solubilizing the sterically hindered diamino compound. Screening studies of available amino acids as possible copromoters for N-cyclohexyl 1,3-propanediamine based on cyclic capacity and rates of absorption ascertained that pipecolinic acid was one of the best amino acid copromoters.

Subsequent studies, however, have demonstrated that the N-cyclohexyl-1,3-propanediamine-pipecolinic acid promoter system has several shortcommings. Firstly, N-cyclohexyl-1,3-propanediamine is both chemically unstable and volatile. For example, it degrades into a cyclic urea in the presence of hydrogen sulfide. In fact, the rate of cyclic urea formation has been found to be highly dependent on hydrogen sulfide concentration, a common contaminant of industrial acid gas streams. The cyclic urea formation from this diamine is favored by the stability of the six-membered ring structure of the cyclic urea. In addition to promoter losses due to cyclic urea formation, which may be a serious problem with hydrogen sulfide rich streams, the cyclic urea product has limited solubility, and its separation from solution poses additional problems. Various techniques for coping with this water insoluble cyclic urea have been proposed; see for example, U.S. Patent Nos. 4,180,548 and 4,183,903. However, these techniques have specific benefits and problems, e.g., specialized equipment is necessary.

Pipecolinic acid also has shortcomings, e.g., it is rather expensive and its picoline precursor is in limited supply.

In view of the commercial potential of using the sterically hindered amino compounds as described and claimed in U.S. Patent Nos. 4,094,957 and 4,112,050, there is a need for finding sterically hindered amino compounds which perform as well as N-cyclohexyl-1,3-propanediamine but do not have the volatility and degradation problems of this compound. Also, there is a need for finding a less costly replacement for pipecolinic acid which possesses its effectiveness.

Various amino acids have been proposed as promoters for alkaline salts in the "hot pot" gas scrubbing process. For example, British Patent No. 1,305,718 describes the use of beta and gamma amino acids as promoters for alkaline salts in the "hot pot" acid gas treating process. These amino acids, however, are not suitable because the beta-amino acids undergo deamination when heated in aqueous potassium carbonate solutions. The gamma amino acids form insoluble lactams under the same conditions. Also, the alpha-amino acid, N-cyclohexyl glycine, as described in Belgian Patent No. 767,105 forms an insoluble diketopiperazine when heated in aqueous solutions containing potassium carbonate.

It has now been discovered that (a) N-secondary butyl glycine and (b) certain well-defined mixtures of sterically hindered monosubstituted alpha-amino acids and tertiary amino acids are excellent copromoters for alkaline salts in the "hot pot" acid gas scrubbing process. N-secondary butyl glycine and the above said mixtures not only provide for high carbon dioxide capacity and high rates of carbon dioxide absorption, but do not form undesirable insoluble degradation products as in the case of N-cyclohexyl-1,3-propanediamine, the beta and gamma amino acids and the alpha amino acid, N-cyclohexyl glycine. The amino acids in this new promoter system are less volatile than N-cyclohexyl-1,3-propanediamine, thereby the economies of the new promoter systems are greater than the previously employed promoters. In addition, the mixture of amino acids is superior to either of the individual amino acids used alone in terms of carbon dioxide capacity and rates of absorption for carbon dioxide. This result would not be expected in view of the relatively low rates of $CO_2$ absorption exhibited by tertiary amino acid promoted potassium carbonate solutions.

Accordingly, in one embodiment of the present invention, there is provided a process for the removal of $CO_2$ from a gaseous stream containing $CO_2$ which comprises contacting said gaseous stream (1) in an absorption step with an aqueous absorbing solution comprising (a) a basic alkali metal salt or hydroxide

selected from alkali metal bicarbonates, carbonates, hydroxides, borates, phosphates and their mixtures, and (b) an activator or promoter system for said basic alkali metal salt or hydroxide selected from N-secondary butyl glycine and a mixture comprising (i) at least one sterically hindered monosubstituted amino acid and (ii) at least one tertiary amino acid, said amino acids being defined by the general formulae:

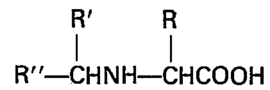

(sterically hindered monosubstituted amino acid) and

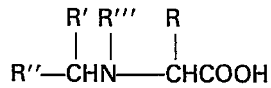

(tertiary amino acid)

wherein R is either hydrogen or methyl, R′ and R″ are each alkyl or substituted alkyl radicals having 1 to 5 carbon atoms, and R‴ is a linear alkyl or substituted linear alkyl radical having from 1 to 6 carbon atoms; and (2) in a desorption and regeneration step, desorbing at least a portion of the absorbed $CO_2$ from said absorbing solution. Preferably, R is hydrogen, R′ is a methyl radical and R″ and R‴ are methyl or ethyl radicals. The most preferred mixture of amino acids comprises N-secondary butyl glycine and N-methyl N-secondary butyl glycine. The mole ratio of the sterically hindered monosubstituted amino acid and the tertiary amino acid may vary widely, but is preferably 1:3 to 3:1, most preferably, 1:1.

As another embodiment of the present invention, there is provided an absorption composition comprising: (a) 10 to about 40% by weight of an alkali metal salt or hydroxide, (b) 2 to about 20% by weight of N-secondary butyl glycine or 2 to about 20% by weight of a mixture of sterically hindered monosubstituted amino acids, and a tertiary amino acid, said amino acids being defined by the general formulae:

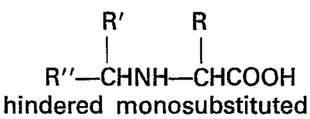

(sterically hindered monosubstituted amino acid)

and

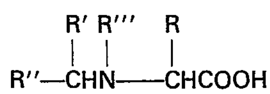

(tertiary amino acid)

wherein R is either hydrogen or methyl, R′ and R″ are each alkyl or substituted alkyl radicals having 1 to 5 carbon atoms, and R‴ is a linear alkyl or substituted linear alkyl radical having from 1 to 6 carbon atoms and optionally, (d) the balance, water. Preferably, R is hydrogen, R′ is a methyl radical, and R″ and R‴ are methyl or ethyl radicals. Most preferably, the amino acid mixture will be comprised of N-secondary butyl glycine and N-methyl-N-secondary butyl glycine.

In general, the aqueous scrubbing solution will comprise an alkaline material comprising a basic alkali metal salt or alkali metal hydroxide selected from Group IA of the Periodic Table of Elements. More preferably, the aqueous scrubbing solution comprises potassium or sodium borate, carbonate, hydroxide, phosphate or bicarbonate. Most preferably, the alkaline material is potassium carbonate.

The alkaline material comprising the basic alkali metal or salt or alkali metal hydroxide may be present in the scrubbing solution in the range from about 10% to about 40% by weight, preferably from 20% to about 35% by weight. The actual amount of alkaline material chosen will be such that the alkaline material and the amino acid activator or promoter system remain in solution throughout the entire cycle of absorption of $CO_2$ from the gas stream and desorption of $CO_2$ from the solution in the regeneration step. Likewise, the amount and mole ratio of the amino acids is maintained such that they remain in solution as a single phase throughout the absorption and regeneration steps. Typically, these criteria are met by including from about 2 to about 20% by weight of each of the amino acids, preferably from 5 to 15% by weight, more preferably, 5 to 10% by weight of the sterically hindered monosubstituted amino acid and from 2 to about 20% by weight, preferably, 5 to about 15% by weight of the tertiary amino acid.

The aqueous scrubbing solution may include a variety of additives typically used in acid gas scrubbing processes, e.g., antifoaming agents, antioxidants, corrosion inhibitors and the like. The amount of these additives will typically be in the range that they are effective, i.e., an effective amount.

Figure 1 graphically illustrates the vapor-liquid equilibrium isotherms for potassium carbonate solutions activated by equal nitrogen contents of N-secondary butyl glycine and diethanolamine at 250°F (121°C) wherein the $CO_2$ partial pressure is a function of the carbonate conversion.

Figure 2 graphically illustrates the vapor-liquid equilibrium isotherms for potassium carbonate

solutions activated by equal nitrogen contents of N-secondary butyl glycine and a mixture of N-secondary butyl glycine and N-methyl N-secondary butyl glycine at 250°F (121°C) wherein the $CO_2$ partial pressure is a function of the carbonate conversion.

The term $CO_2$ includes $CO_2$ alone or in combination with $H_2S$, $SO_2$, $SO_3$, $CS_2$, HCN, COS and the oxides and sulfur derivatives of $C_1$ to $C_4$ hydrocarbons. These acid gases may be present in trace amounts within a gaseous mixture or in major proportions.

The contacting of the absorbant mixture and the acid gas may take place in any suitable contacting tower. In such processes, the gaseous mixture from which the acid gases are to be removed may be brought into intimate contact with the absorbing solution using conventional means, such as a tower packed with, for example, ceramic rings or with bubble cap plates or sieve plates, or a bubble reactor.

In a preferred mode of practising the invention, the absorption step is conducted by feeding the gaseous mixture into the base of the tower while fresh absorbing solution is fed into the top. The gaseous mixture freed largely from acid gases emerges from the top. Preferably, the temperature of the absorbing solution during the absorption step is in the range from about 25 to about 200°C, and more preferably from 35 to about 150°C. Pressures may vary widely; acceptable pressures are between 0.35 and 138 bar (5 and 2000 psia), preferably 7 to 103 bar (100 to 1500 psia), and most preferably 13.8 to 70 bar (200 to 1000 psia) in the absorber. In the desorber, the pressures will range from about 0.35 to 7 bar about 5 to 100 psig). The partial pressure of the acid gas, e.g., $CO_2$ in the feed mixture will preferably be in the range from about 0.07 to about 35 bar (about 0.1 to about 500 psia), and more preferably in the range from about 0.7 to about 27.6 bar (about 1 to about 400 psia). The contacting takes place under conditions such that the acid gas, e.g., $CO_2$, is absorbed by the solution. Generally, the countercurrent contacting to remove the acid gas will last for a period of from 0.1 to 60 minutes, preferably 1 to 5 minutes. During absorption, the solution is maintained in a single phase. The amino acid mixture aids in reducing foam in the contacting vessels.

The aqueous absorption solution comprising the aqueous mixture containing the alkaline material, the activator system comprising the sterically hindered monosubstituted amino acid and the tertiary amino acid which is saturated or partially saturated with gases, such as $CO_2$ and $H_2S$ may be regenerated so that it may be recycled back to the absorber. The regeneration should also take place in a single liquid phase. Therefore, the presence of the highly water soluble amino acid mixture provides an advantage in this part of the overall acid gas scrubbing process. The regeneration or desorption is accomplished by conventional means, such as pressure reduction, which causes the acid gases to flash off or by passing the solution into a tower of similar construction to that used in the absorption step, at or near the top of the tower, and passing an inert gas such as air or nitrogen or preferably steam up the tower. The temperature of the solution during the regeneration step may be the same as used in the absorption step, i.e., 25 to about 200°C, and preferably 35 to about 150°C. The absorbing solution, after being cleansed of at least a portion of the acid bodies, may be recycled back to the absorbing tower. Makeup absorbent may be added as needed. Single phase is maintained during desorption by controlling the acid gas, e.g., $CO_2$, level so that it does not fall into the region where two liquid phases form. This of course, following the practice of the present invention is facilitated by the use of the highly water soluble amino acid mixture.

As a typical example, during desorption, the acid gas, e.g., $CO_2$-rich solution from the high pressure absorber is sent first to a flash chamber where steam and some $CO_2$ are flashed from solution at low pressure. The amount of $CO_2$ flashed off will, in general, be about 35 to 40% of the net $CO_2$ recovered in the flash and stripper. This is increased somewhat, e.g., to 40 to 50%, with the high desorption rate promoter system owing to a closer approach to equilibrium in the flash. Solution from the flash drum is then steam stripped in the packed or plate tower, stripping steam having been generated in the reboiler in the base of the stripper. Pressure in the flash drum and stripper is usually 1.1 to about 7 bar (16 to about 100 psia), preferably 1.1 to about 2 bar (16 to about 30 psia), and the temperature is in the range from about 25 to about 200°C, preferably 35 to about 150°C, and more preferably 100 to about 140°C. Stripper and flash temperatures will, of course, depend on stripper pressure, thus at about 1.1 to 1.7 bar (about 16 to 25 psia) stripper pressures, the temperature will preferably be about 100 to about 140°C during desorption. Single phase is maintained during desorption by regulating the amount of acid gas, e.g., $CO_2$, recovered.

In the most preferred embodiment of the present invention, the acid gas, e.g., $CO_2$ is removed from a gaseous stream by means of a process which comprises, in sequential steps, (1) contacting the gaseous stream with a solution comprising 10 to about 40 weight percent, preferably 20 to about 30 weight percent of potassium carbonate, an activator or promoter system comprising 2 to about 20 weight percent, preferably 15 to about 15 weight percent more preferably 5 to about 10 weight percent of at least one sterically hindered monosubstituted amino acid e.g. N-secondary butyl glycine, 2 to about 20 weight percent, and preferably 5 to about 10 weight percent of a tertiary amino acid e.g. N-methyl-N secondary butyl glycine, the balance of said solution being comprised of water, said contacting being conducted at conditions whereby the acid gas is absorbed in said solution, and preferably at a temperature ranging from 25 to about 200°C, more preferably from 35 to about 150°C and a pressure ranging from 7 to about 103 bar (100 to about 1500 psig), and (2) regenerating said solution at conditions whereby said acid gas is desorbed from said solution. By practising the present invention, one can operate the process above described at conditions whereby the working capacity, which is the difference in moles of acid gas absorbed in the solution at the termination of steps (1) and (2) based on the moles of potassium carbonate originally present, is greater than obtained under the same operating conditions for removing acid gases from

gaseous streams, wherein said same operating conditions do not include a sterically hindered amine promoter. In other words, working capacity is defined as follows:

| | | |
|---|---|---|
| $CO_2$ in solution at completion of absorption | less | $CO_2$ in solution at completion of desorption |

Which is:

$$\left[\frac{\text{Moles of } CO_2 \text{ Absorbed}}{\text{Initial Moles } K_2CO_3}\right] \text{ less } \left[\frac{\text{Moles Residual } CO_2 \text{ Absorbed}}{\text{Initial Moles } K_2CO_3}\right]$$

It should be noted that throughout the specified cation wherein working capacity is referred to, the term is defined as the difference between $CO_2$ loading in solution at absorption conditions (step 1) and the $CO_2$ loading in solution at regeneration conditions (step 2) each divided by the initial moles of potassium carbonate. The working capacity relates to the thermodynamic cyclic capacity, that is the loading is measured at equilibrium conditions. This working capacity may be obtained from the vapor-liquid equilibrium isotherm, that is, from the relation between the $CO_2$ pressure in the gas and the acid gas, e.g., $CO_2$ loading in the solution at equilibrium at a given temperature. To calculate thermodynamic cyclic capacity, the following parameters must usually be specified: (1) acid gas, e.g., $CO_2$ absorption pressure, (2) acid gas, e.g., $CO_2$ regeneration pressure, (3) temperature of absorption, (4) temperature of regeneration, (5) solution composition, that is weight percent amine and the weight percent of the alkaline salt or hydroxide, for example potassium carbonate, and (6) gas composition. The skilled artisan may conveniently demonstrate the improved process which results by use of a sterically hindered amine by a comparison directly with a process wherein the sterically hindered amine is not included in the aqueous scrubbing solutions. For exampls it will be found when comparing two similar acid gas scrubbing processes (that is similar gas composition, similar scrubbing solution composition, similar pressure and temperature conditions) that when the sterically hindered amines are utilized the difference between the amount of acid gas, e.g., $CO_2$ absorbed at the end of step 1 (absorption step) defined above and step 2 (desorption step) defined above is significantly greater. This significantly increased working capacity is observed even though the scrubbing solution that is being compared comprises an equimolar amount of a prior art amine promoter, such as diethanolamine, 1,6-hexanediamine, etc. It has been found that the use of the mixture of amino acids of the invention provides a working capacity which is at least 15% greater than the working capacity of a scrubbing solution which does not utilize a sterically hindered amine. Working capacity increases of from 20 to 60% may be obtained by use of the mixture of sterically hindered amino acid and tertiary amino acids compared to diethanolamine.

Besides increasing working capacity and rates of absorption and desorption, the use of mixture of amino acids leads to lower steam consumption during desorption.

Steam requirements are the major part of the energy cost of operating an acid gas, e.g., $CO_2$ scrubbing unit. Substantial reduction in energy, i.e., operating costs will be obtained by the use of the process of the sterically hindered amines. Additional savings from new plant investment reduction and debottlenecking of existing plants may also be obtained by the use of sterically hindered amines. The removal of acid gases such as $CO_2$ from gas mixtures is of major industrial importance, particularly the systems which utilize potassium carbonate activated by the unique activator or promoter system of the present invention.

While the sterically hindered amines, as shown in U.S. Patent No. 4,112,050, provided unique benefits in their ability to improve the working capacity in the acid scrubbing process, their efficiency decreases in alkaline "hot pot" (hot potassium carbonate) scrubbing systems at high temperatures and at low concentrations of the acid gas due to phase separation. Therefore, full advantage of the highly effective sterically hindered amines cannot always be utilized at these operating conditions. The addition of an amino acid, as a cosolvent, as shown in U.S. Patent No. 4,094,957, solves the problem of phase separation and enables a more complete utilization of sterically hindered amines as the alkaline materials activator or promoter. This result was unexpected for the reason that many amino acids alone, while soluble in these alkaline systems, are not as effective as activators in acid gas scrubbing processes as the other sterically hindered amines. Therefore, it is not expected that a mixture of two amino acids, as instantly claimed and disclosed, would provide high working capacity and high rates of $CO_2$ absorption.

The absorbing solution as described above, will be comprised of a major proportion of two alkaline materials, e.g., alkali metal salts or hydroxides and a minor proportion of the amino acid activator system. The remainder of the solution will be comprised of water and/or other commonly used additives, such as anti-foaming agents, antioxidants, corrosion inhibitors, etc. Examples of such additives include arsenious anhydride, selenious and tellurous acid. proteins, vanadium oxides, e.g., $V_2O_3$, chromates, e.g., $K_2Cr_2O_7$, etc.

Many of the amino acids useful in the practice of the present invention are either available commercially or may be prepared by various known procedures.

Preferred sterically hindered mono-substituted amino acids include N-secondary butyl glycine (CAS Registry Number 58695-42-4), N-isopropyl glycine, N-(2-amyl) glycine and N-secondary butyl alanine.

Preferred tertiary amino acids include N-methyl N-secondary butyl glycine, 2-pipecolino-1-acetic acid, hexamethyleneimino acetic acid, N-butyl-sarcosine, N-isobutyl sarcosine, N-propyl sarcosine and N,N-dipropyl glycine.

A preferred method for preparing the amino acid mixture comprises first reacting glycine or alanine under reductive conditions with a ketone in the presence of a hydrogenation catalyst. This reaction produces the sterically hindered monosubstituted amino acid. As a second reaction, the sterically hindered monosubstituted amino acid is reacted under reductive conditions with a linear aldehyde in the presence of a hydrogenation catalyst to produce the corresponding tertiary amino acid.

The invention is illustrated further by the following examples which, however, are not to be taken as limiting in any respect. All parts and percentages, unless expressly stated to be otherwise, are by weight.

Example 1

"Hot pot" acid gas treating process

The reaction apparatus consists of an absorber and a desorber. The absorber is a vessel having capacity of 2.5 liters and a diameter of 10 cm, equipped with a heating jacket and a stirrer. A pump removes liquid from the bottom of the reactor and feeds it back to above the level through a stainless-steel sparger. Nitrogen and $CO_2$ can be fed to the bottom of the cell through a sparger.

The desorber is a 1-liter reactor, equipped with teflon blade stirrer, gas sparger, reflux condenser and thermometer.

The reaction apparatus is the same as shown in Figure 1 of U.S. Patent No. 4,112,850.

The following reagents are charged into a 2-liter Erlenmeyer flask:

92 g of N-sec. butyl glycine
225 g of $K_2CO_3$
428 g of water

When all solid has dissolved, the mixture is put into the absorber and brought to 80°C. The apparatus is closed and evacuated until the liquid begins to boil. At this point, $CO_2$ is admitted into the absorber. Thirty-three (33) liters of $CO_2$ is absorbed.

The rich solution so obtained is transferred to the desorber and boiled for one hour, during which time 30 liters of $CO_2$ is desorbed. The regenerated solution so obtained is put into the absorber and brought to 80°C. The apparatus is closed and evacuated until the liquid begins to boil. At this point $CO_2$ is admitted. 32.2 liters of $CO_2$ is absorbed, of which 13 liters is absorbed in the first minute.

Example 2 (Comparative)

The procedure of Example 1 is repeated after replacing N-secondary butyl glycine with an equimolar amount of other amino compounds, including structurally related sterically hindered amines and amino acids, and correcting the amount of water in order to have a total initial weight of 750 g. The results of these tests are shown in Table I.

TABLE I

$CO_2$ scrubbing by amino acid promoted $K_2CO_3$ solutions

| | Liters of $CO_2$ absorbed into regenerated solution | |
|---|---|---|
| Amino acid | Total | First minute |
| N-sec. butyl glycine | 29.6 | 13 |
| N-cyclohexyl glycine | 30.8 | 14 |
| N-isopropyl glycine | 27.5 | 10 |
| N-(2-amyl)-glycine | 26.5 | 17 |
| N-sec. butyl alanine | 15 | 3 |
| N-isopropyl alanine | 25.2 | 4 |
| Pipecolinic Acid | 22.5 | 8 |

The data in Table I show that N-secondary butyl glycine and N-cyclohexyl glycine are superior promoters to the other tested sterically hindered amines and amino acids of similar structure.

In view of the data shown in Table I, additional tests were conducted with N-secondary butyl glycine and N-cyclohexyl glycine to ascertain their suitability in large scale acid gas scrubbing operations.

Example 3

(a) Aging studies in $CO_2$ scrubbing apparatus

The following experiments are carried out to ascertain the stability of N-secondary butyl glycine and N-cyclohexyl glycine under accelerated-simulated acid gas treating conditions.

The following reagents are charged into a stainless-steel bomb:

121 g of N-secondary butyl glycine
433 g of $KHCO_3$
540 g of $H_2O$

The bomb is put into an oven and heated at 120°C for 1000 hours. Then the content is discharged into a 2 liter flask and refluxed for several hours.

750 g is taken and subjected to an absorption-desorption-reabsorption cycle as described in Example 1. 27.9 liters of $CO_2$ is absorbed into the regenerated solution, 10 liters being absorbed in the first minute.

Comparison of this result with that obtained with the fresh solution, described in Example 1, shows that the aging process does not lead to a significant loss of activity.

If the aging experiment is carried out after replacing N-secondary butyl glycine with the equivalent amount of N-cyclohexyl glycine, 145 g, and reducing the water to 516 g in order to have the same total weight, a considerable amount of solid, identified as 1,4-bis-cyclohexyl-2,5-diketopiperazine is formed. An attempt to carry out an absorption-desorption cycle causes plugging of the unit.

(b) Aging under $CO_2$ and $H_2S$

The following reagents are charged into a stainless-steel bomb:

121 g of N-secondary butyl glycine
24 g of $K_2S$
390 g of $KHCO_3$
544 g of water

The bomb is put into an oven and heated at 120°C for 1000 hours. Then the content is discharged into a 2 liter flask and refluxed for several hours.

765 g is taken and subjected to an absorption-desorption-reabsorption cycle as described in Example 1. 28.9 liters of $CO_2$ is absorbed into the regenerated solution, 10 g being absorbed in the first minute. Comparison of this result with that obtained with the fresh solution, described in Exampe 1, shows that the aging process leads to only a slight loss of activity.

The excellent stability under the aging conditions shown above for the N-secondary butyl glycine coupled with its good performance as a promoter, demonstrates the desirability of using this amino acid rather than N-cyclohexylglycine.

Example 4

Vapor-liquid equilibrium measurements were carried out to confirm that N-secondary butyl glycine leads to a broadening of cyclic capacity as compared to diethanolamine owing to a shift in the equilibrium position.

The vapor-liquid equilibrium measurements are made by first preparing the following solution:

73.6 g of N-secondary butyl glycine
150.0 g of $K_2CO_3$
376.4 g $H_2O$
———
600.0 g

The solution is charged into a one-liter autoclave, equipped with stirrer, condenser, inlet and outlet tube for gases and liquid-sampling line. The autoclave is brought to 121°C (250°F) while blowing through the solution a mixture of 20 mol % $CO_2$ and 80 mol % He. The rate at which the gaseous mixture is fed is .2 liter/min.

The pressure is 20 bar (300 psig). When the outgoing gas has the same composition as the entering gas, equilibrium has been reached. A sample of liquid is taken and analyzed. The $CO_2$ content is 13.0 wt.%, the K content is 13.6%, from which a carbonation ratio of 1.70 is calculated. By carbonation ratio, it is meant the molar ratio of $CO_2$ absorbed to initial $K_2CO_3$.

The operation is repeated several times, changing the composition of the gas and the total pressure. If the partial pressures of $CO_2$ are plotted against the carbonation ratios, the curve shown in Figure 1 is obtained.

Using the same procedure, the vapor-liquid equilibrium curve is determined, using diethanolamine in an amount equivalent to the total amino acid amount used above. The resulting vapor-liquid equilibrium curve is also shown in Figure 1.

In the interval of $P_{CO_2}$ studied, i.e., from 0.56 to 20 bar (.08 to 300 psia), N-secondary butyl glycine leads to a larger cyclic capacity than diethanolamine.

Example 5

"Hot pot" acid gas treating process using combination of sterically hindered amino acids and tertiary amino acids

Using the same reaction apparatus as described in Example 1, the following reagents are changed into a 2-liter Erlenmeyer flask to demonstrate the use of the combination of sterically hindered amino acids and tertiary amino acids:

46 g of N-sec. butyl glycine
51 g of N-methyl N-n-butyl glycine (N-butyl sarcosine)
225 g of $K_2CO_3$
428 g of water

When all solid has dissolved, the mixture is put into the absorber and brought to 80°C. The apparatus is closed and evacuated until the liquid begins to boil. At this point, $CO_2$ is admitted into the absorber. Thirty-three (33) liters of $CO_2$ is absorbed.

The rich solution so obtained is transferred to the desorber and boiled for one hour, during which time 30 liters of $CO_2$ is desorbed. The regenerated solution so obtained is put into the absorber and brought to 80°C. The apparatus is closed and evacuated until the liquid begins to boil. At this point $CO_2$ is admitted. 32.2 liters of $CO_2$ is absorbed, of which 13 liters is absorbed in the first minute.

Example 6 (Comparative)

The procedure of Example 1 is repeated, using the following reagents:

102 g of N-methyl N-n-butyl glycine
225 g of $K_2CO_3$
423 g of water

The absorption-desorption-reabsorption cycle is carried out as described above. 28.3 liters of $CO_2$ is absorbed into the regenerated solution, only 5 liters being absorbed in the first minute.

The above comparative test shows that the combination of sterically hindered and tertiary amino acids of Example 5 leads to a better result than N-secondary butyl glycine (Example 1) or the tertiary amino acid, above (Example 6). Under similar conditions, 2-pipecolino-1-acetic acid gives 28.5 liters of $CO_2$ of absorbed into the regenerated solution, 5 liters being absorbed in the first minute. A 1/1 molar combination with N-sec. butyl glycine gives 30.2 liters absorbed into the regenerated solution, 11 liters being absorbed in the first minute. This latter test further supports the finding that the combination of the instant invention is superior than the single components.

Example 7

The procedure of Example 5 is repeated whereby the following reagents are put into a 2 liter Erlenmeyer:

46 g of N-sec. butyl glycine (SBG)
51 g of N-methyl N-sec. butyl glycine (MSBG)
225 g of $K_2CO_3$
428 g of $H_2O$

When all solid has dissolved, the mixture is put into the absorber and brought to 80°C. The apparatus is evacuated until the liquid begins to boil. Then $CO_2$ is admitted and the rate of absorption and the total capacity measured. The solution reabsorbed is 32.5 liters of $CO_2$, about 12 liters is absorbed in the first minute.

Example 8

The procedure of Example 7 is repeated for several solutions containing varying amounts of N-secondary butyl glycine (SBG) and N-methyl N-secondary butyl glycine (MSBG). These tests are compared against the promoter system described in U.S. Patent No. 4,094,957, i.e., N-cyclohexyl-1,3-propanediamine (CHPD) and pipecolinic acid (PA) as well as CHPD and PA alone. The results of these tests are shown in Table II.

TABLE II
$CO_2$ scrubbing by SBG/MSBG mixtures

| Amino[b] acid conc. % | MSBG/SBG (mole/mole) | MSBG (g) | SBG (g) | $CO_2$ capacity liters | Liters in first minutes | Time (min:sec) to absorb | | |
|---|---|---|---|---|---|---|---|---|
| | | | | | | 10 liters | 15 liters | 20 liters |
| 12.26 | 1:1 | 51 | 46 | 32.5 | 12 | 0:47 | 1:25 | 2:16 |
| 12.26 | 1:0 | 102 | — | 29.8 | 6 | 2:05 | 3:30 | 5:35 |
| 12.26 | 0:1 | — | 92 | 29.6 | 13 | 0:44 | 1:13 | 1:55 |
| 8.18 | 1:3 | 25.5 | 46 | 29.8 | 11 | 0:52 | 1:31 | 2:27 |
| 8.18 | 3:1 | 51 | 23 | 29.9 | 8 | 1:20 | 2:24 | 3:45 |
| 12.26 | 1:1 | 51 | 46 | 31.6 | 12 | 0:48 | 1:20 | 2:00 |
| 12.26 | 1:3 | 25.5 | 69 | 31.1 | 13 | 0:42 | 1:10 | 1:47 |
| 12.26 | 3:1 | 76.5 | 23 | 31.9 | 11 | 0:56 | 1:33 | 2:20 |
| 12.26 | 1:1 | 51 | 46 | 30.5 | 12 | 0:44 | 1:25 | 2:15 |
| Standard | | (CHPD) 55 | (PA) 22.5 | 31.2 | 12 | 0:47 | 1:24 | 2:17 |
| | | (CHPD) 55 | — | 25.2 | 6 | 1:47 | 3:03 | 5:00 |
| | | — | (PA) 90.5 | 22.5 | 8 | 1:10 | 2:05 | 3:55 |

[a] 225 g $K_2CO_3$ and water to total 750 g.
[b] Wt. % based on molar equiv. of SBG.

It can be seen from the data in Table II that the mixtures of MSBG and SBG provide high $CO_2$ capacity and good rates of absorption for $CO_2$. The data shows that the tertiary amino acid, MSBG, used alone, provides reasonable $CO_2$ capacity, but the $CO_2$ absorption rates are extremely low. When the sterically hindered monosubstituted amino acid, SBG, is used alone, both the $CO_2$ capacity and rates of $CO_2$ absorption are reasonably good. However, the best results are achieved by using the mixture of both the sterically hindered monosubstituted amino acid and the tertiary amino acid. This mixture is shown to be comparable to the CHPD/PA mixture in terms of $CO_2$ capacity and $CO_2$ absorption rates.

Example 9

Vapor-liquid equilibrium measurements were carried out to confirm that the mixture of the sterically hindered monosubstituted amino acids and tertiary amino acids lead to a broadening of cyclic capacity as compared to sterically hindered monosubstituted amino acids alone owing to a shift in the equilibrium position.

The vapor-liquid equilibrium measurements are made by first preparing the following solution:

36.8 g of N-sec butyl glycine
40.7 g of N-methyl-N-sec butyl glycine
150.0 g of $K_2CO_3$
372.5 g $H_2O$
———
600.0 g

The solution is charged into a one-liter autoclave, equipped with stirrer, condenser, inlet and outlet tube for gases and liquid-sampling line. The autoclave is brought to 121°C (250°F) while blowing through the solution a mixture of 20 mol % $CO_2$ and 80 mol % He. The rate at which the gaseous mixture is fed is .2 liter/min.

The pressure is 250 psig. When the outgoing gas has the same composition as the entering gas, equilibrium has been reached. A sample of liquid is taken and analyzed. The $CO_2$ content is 13.4 wt. %, from which a carbonation ratio of .79 is calculated. By carbonation ratio, it is meant the molar ratio of $CO_2$ absorbed to initial $K_2CO_3$.

The operation is repeated several times, changing the composition of the gas and the total pressure. If the partial pressures of $CO_2$ are plotted against the carbonation ratios, the curve shown in Figure 2 is obtained.

Using the same procedure, the vapor-liquid equilibrium curve is determined, using N-sec butyl glycine in an amount equivalent to the total amino acid amount used above. The resulting vapor-liquid equilibrium curve is also shown in Figure 1.

In the interval of $P_{CO_2}$ studied, i.e., from 0.56 to 20 bar (.08 to 300 psia), the combination of N-sec butyl glycine and N-methyl-N-sec butyl glycine leads to a larger cyclic capacity than N-sec buty; glycine alone.

## Claims

1. A process for the removal of $CO_2$ from a gaseous stream containing $CO_2$ which comprises (1) contacting said gaseous stream in an absorption step with an aqueous absorbing solution comprising (a) a basic alkali metal salt or hydroxide selected from alkali metal bicarbonates, carbonates, hydroxides, borates, phosphates and their mixtures, and (b) an activator or promoter system for said basic alkali metal salt or hydroxide selected from N-secondary butyl glycine and a mixture comprising: (i) at least one sterically hindered monosubstituted amino acid and (ii) at least one tertiary amino acid, said amino acids having defined by the general formulae:

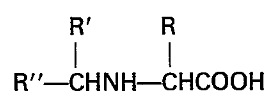

(sterically hindered monosubstituted amino acid)

and

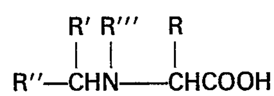

(tertiary amino acid)

wherein R is either hydrogen or methyl, R′ and R″ are each alkyl or substituted alkyl radicals having 1 to 5 carbon atoms, and R‴ is a linear alkyl or substituted linear alkyl radical having from 1 to 6 carbon atoms; and (2) in a desorption and regeneration step, desorbing at least a portion of the absorbed $CO_2$ from said absorbing solution.

2. A process according to claim 1 wherein said activator or promoter comprises a mixture of at least one sterically hindered monosubstituted amino acid and at least one tertiary amino acid.

3. A process according to claim 1 or 2 wherein the aqueous solution contains 10 to about 40% by weight of potassium carbonate as said basic alkali metal salt.

4. A process according to claims 2 or 3 wherein the aqueous solution contains 2 to about 20% by weight of said sterically hindered monosubstituted amino acid and 2 to about 20% by weight of said tertiary amino acid.

5. A process according to claims 2, 3, or 4 wherein said sterically hindered monosubstituted amino acid is N-secondary butyl glycine and said tertiary amino acid is N-methyl N-secondary butyl glycine.

6. A process for the removal of $CO_2$ from a gaseous stream containing $CO_2$ in accordance with claim 1, which comprises, in sequential steps, (1) contacting the gaseous stream with an absorbing solution comprising (a) from about 20 to about 30% by weight of potassium carbonate, and (b) an activator or promoter system for the potassium carbonate. comprising (i) from about 5 to about 10% by weight of N-secondary butyl glycine, and (ii) from about 5 to about 15% by weight of N-methyl-N-secondary butyl glycine, (c) the balance of the solution comprising water and additives selected from antifoaming agents, antioxidants and corrosion inhibitors, wherein said contacting is conducted at conditions whereby $CO_2$ is absorbed in said absorbing solution and the temperature of the absorbing solution is in the range from about 35 to about 150°C, and the pressure in the absorber is in the range from about 7 to about 103 bar (about 100 to about 1500 psig); and (2) regenerating said absorbing solution at conditions whereby $CO_2$ is desorbed from said absorbing solution, wherein the regeneration takes place at temperatures ranging from about 35 to about 150°C and at pressures ranging from about 0.35 to 7 bar (about 5 to about 100 psig).

7. A process according to claim 6 wherein the absorbing solution from the regeneration step is recycled for reuse in the absorption step.

8. An absorption composition comprising: (a) 10 to about 40% by weight of an alkali metal salt or hydroxide, (b) 2 to about 20% by weight of a sterically hindered monosubstituted amino acid, and (c) 2 to about 20% by weight of a tertiary amino acid, said amino acids being defined by the general formulae:

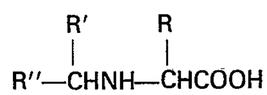

(sterically hindered monosubstituted amino acid)

and

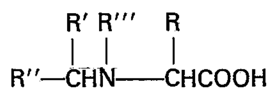

(tertiary amino acid)

wherein R is either hydrogen or methyl, R′ and R″ are each alkyl or substituted alkyl radicals having 1 to 5 carbon atoms, and R‴ is a linear alkyl or substituted linear alkyl radical having from 1 to 6 carbon atoms and (d) water.

9. An absorption composition comprising (a) 20 to 30% by weight of potassium carbonate, (b) 5 to about 10% by weight of N-secondary butyl glycine, (c) 5 to about 10% by weight of N-methyl-N-secondary butyl glycine, and optimally (d) water.

10. A composition according to claims 8 or 9 wherein the composition includes one or more antifoaming agents, antioxidants or corrosion inhibitors.

**Revendications**

1. Procédé pour l'élimination du $CO_2$ d'un courant gazeux contenant du $CO_2$, qui consiste (1) à mettre en contact ledit courant gazeux, dans une étape d'absorption, avec une solution absorbante aqueuse comprenant (a) un sel ou hydroxyde basique de métal alcalin choisi parmi les bicarbonates, carbonates, hydroxydes, borates/phosphates de métaux alcalins et leurs mélanges, et (b) un système activateur ou promoteur pour ledit sel ou hydroxyde basique de métal alcalin, choisi entre la N-sec-butyl-glycine et un mélange comprenant (i) au moins un acide aminé monosubstitué à empêchement stérique et (ii) au moins un acide aminé tertiaire, lesdits acides aminés étant définis par les formules générales:

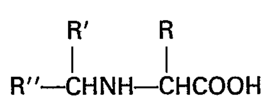

(acide aminé monosubstitué à empêchement stérique)

et

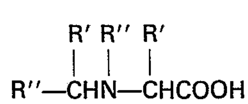

(acide aminé tertiaire)

dans lesquelles R est l'hydrogène ou le radical méthyle, R′ et R″ sont chacun un radical alkyle ou alkyle

substitué ayant 1 à 5 atomes de carbone, et R''' est un radical alkyle linéaire ou alkyle linéaire substitué ayant 1 à 6 atomes de carbone; et (2) dans une étape de désorption et de régéneration, à désorber de ladite solution absorbante au moins une partie du $CO_2$ absorbé.

2. Procédé selon la revendication 1, dans lequel ledit activateur ou promoteur comprend un mélange d'au moins un acide aminé monosubstitué à empêchement stérique et d'au moins un acide aminé tertiaire.

3. Procédé selon la revendication 1 ou 2, dans lequel la solution aqueuse contient 10 à environ 40% en poids de carbonate de potassium en tant que ledit sel basique de métal alcalin.

4. Procédé selon les revendications 2 ou 3, dans lequel la solution aqueuse contient 2 à environ 20% en poids dudit acide aminé monosubstitué à empêchement stérique et 2 à environ 20% en poids dudit acide aminé tertiaire.

5. Procédé selon les revendications 2, 3 ou 4, dans lequel ledit acide aminé monosubstitué à empêchement stérique est la N-sec-butyl-glycine et ledit acide aminé tertiaire est la N-méthyl-N-sec-butyl-glycine.

6. Procédé pour l'élimination du $CO_2$ d'un courant gazeux contenant du $CO_2$ selon la revendication 1, qui consiste, dans des étapes successives, (1) à mettre en contact le courant gazeux avec une solution absorbante comprenant (a) d'environ 20 à environ 30% en poids de carbonate de potassium et (b) un système activateur ou promoteur pour le carbonate de potassium, comprenant (i) d'environ 5 à environ 10% en poids de N-sec-butyl-glycine, et (ii) d'environ 5 à environ 15% en poids de N-méthyl-N-sec-butyl-glycine, (c) le reste de la solution comprenant de l'eau et des additifs choisis parmi les agents anti-moussants, les anti-oxydants et les inhibiteurs de corrosion, cette mise en contact étant réalisée dans des conditions dans lesquelles le $CO_2$ est absorbé par ladite solution absorbante et la température de la solution absorbante est comprise entre environ 35 et environ 150°C, et la pression dans l'absorbeur est comprise entre environ 7 et environ 103 bar (entre environ 100 et environ 1500 psig), et (2) à régénérer ladite solution absorbante dans des conditions dans lesquelles le $CO_2$ est désorbé de ladite solution absorbante, la régénération ayant lieu à des températures comprises entre environ 35 à environ 150°C et à des pressions d'environ 0,35 à 7 bar (environ 5 à environ 100 psig).

7. Procédé selon la revendication 6, dans lequel la solution absorbante provenant de l'étape de régénération est recyclée pour réutilisation dans l'étape d'absorption.

8. Composition absorbante comprenant (a) 10 à environ 40% en poids d'un sel ou hydroxyde d'un métal alcalin, (b) 2 à environ 20% en poids d'un acide aminé monosubstitué à empêchement stérique et (c) 2 à environ 20% en poids d'un acide aminé tertiaire, lesdits acides aminés étant définis par les formules générales

```
 R'     R'
 |      |
R''—CHNH—CHCOOH
```

(acide aminé monosubstitué à empêchement stérique)

et

```
 R'  R'' R'
 |   |   |
R''—CHN—CHCOOH
```

(acide aminé tertiaire)

où R est l'hydrogène ou le radical méthyle, R' et R'' sont chacun un radical alkyle ou alkyle substitué ayant 1 à 5 atomes de carbone, et R''' est un radical alkyle linéaire ou alkyle linéaire substitué ayant 1 à 6 atomes de carbone, et (d) de l'eau.

9. Composition absorbante comprenant (a) 20 à 30% en poids de carbonate de potassium, (b) 5 à environ 10% en poids de N-sec-butyl-glycine, (c) 5 à environ 10% en poids de N-méthyl-N-sec-butyl-glycine, et (d) de l'eau.

10. Composition selon les revendications 8 ou 9, où la composition comprend un ou plusieurs agents anti-moussants, anti-oxydants ou inhibiteurs de corrosion.

**Patentansprüche**

1. Verfahren zur Entfernung von $CO_2$ aus einem $CO_2$ enthaltenden Gasstrom, das dadurch gekennzeichnet ist, daß man (1) den Gasstrom in einer Absorptionsstufe mit einer wässrigen Absorptionslösung kontaktiert, die (a) ein basisches Alkalimetallsalz oder -hydroxid ausgewählt aus Alkalimetallbicarbonaten, -carbonaten, -hydroxiden, -boraten, -phosphaten und deren Mischungen und (b) ein Aktivator- oder Promotorsystem für das basische Alkalimetallsalz oder -hydroxid enthält, das ausgewählt ist aus N-sek.-Butylglycin und einer Mischung, die (i) mindestens eine sterisch gehinderte monosubstituierte Aminosäure und (ii) mindestens eine tertiäre Aminosäure enthält, wobei die Aminosäuren durch die folgenden allgemeinen Formeln definiert sind:

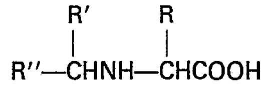

(sterisch gehinderte monosubstituierte Aminosäure)

und

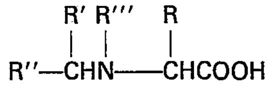

(tertiäre Aminosäure),

wobei R entweder Wasserstoff oder Methyl ist, R' und R'' jeweils Alkyl- oder substituierte Alkylreste mit 1 bis 5 Kohlenstoffatomen sind und R''' ein linearer Alkyl- oder substituierter linearer Alkylrest mit 1 bis 6 Kohlenstoffatomen ist, und (2) in einer Desorptions- und Regenerierungsstufe zumindest einen Teil des absorbierten $CO_2$ aus der Absorptionslösung desorbiert.

2. Verfahren nach Anspruch 1, dadurch gekennzeichnet, daß der Aktivator oder Promoter eine Mischung aus mindestens einer sterisch gehinderten monosubstituierten Aminosäure und mindestens einer tertiären Aminosäure umfaßt.

3. Verfahren nach Anspruch 1 oder 2, dadurch gekennzeichnet, daß die wässrige Lösung 10 bis etwa 40 Gew.% Kaliumcarbonat als das basische Alkalimetallsalz enthält.

4. Verfahren nach Anspruch 2 oder 3, dadurch gekennzeichnet, daß die wässrige Lösung 2 bis etwa 20 Gew.% der sterisch gehinderten monosubstituierten Aminosäure und 2 bis etwa 20 Gew.% der tertiären Aminosäure enthält.

5. Verfahren nach Anspruch 2, 3 oder 4, dadurch gekennzeichnet, daß die sterisch gehinderte monosubstituierte Aminosäure N-sek.-Butylglycin und die tertiäre Aminosäure N-Methyl-N-sek.-butylglycin ist.

6. Verfahren zur Entfernung von $CO_2$ aus einem $CO_2$ enthaltenden Gasstrom nach Anspruch 1, dadurch gekennzeichnet, daß man in aufeinanderfolgenden Stufen (1) den Gasstrom mit einer Absorptionslösung kontaktiert, die (a) etwa 20 bis etwa 30 Gew.-% Kaliumcarbonat und (b) ein Aktivator- oder Promotorsystem füur das Kaliumcarbonat enthält, das (i) etwa 5 bis etwa 10 Gew.% N-sek.-Butylglycin und (ii) etwa 5 bis etwa 15 Gew.% N-Methyl-N-sek.-butylglycin enthält, wobei (c) der Rest der Lösung Wasser und aus Antischaumitteln, Antioxydantien und Korrosionsinhibitoren ausgewählte Additive umfaßt und wobei das Kontaktieren bei Bedingungen durchgeführt wird, unter denen $CO_2$ in der Absorptionslösung absorbiert wird und die Temperatur der Absorptionslösung im Bereich von etwa 35 bis 150°C und der Druck im Absorber im Bereich von etwa 7 bis 103 bar liegt, und (2) die Absorptionslösung bei Bedingungen regeneriert, unter denen $CO_2$ aus der Absorptionslösung desorbiert wird, wobei die Regenerierung bei Temperaturen im Bereich von etwa 35 bis 150°C und Drücken von etwa 0,35 bis 7 bar erfolgt.

7. Verfahren nach Anspruch 6, dadurch gekennzeichnet, daß Absorptionslösung aus der Regenerierungsstufe zur Wiederverwendung in die Absorptionsstufe zurückgeführt wird.

8. Eine Absorptionszusammensetzung gekennzeichnet durch: (a) 10 bis etwa 40 Gew.% eines Alkalimetallsalzes oder -hydroxids, (b) 2 bis etwa 20 Gew.% einer sterisch gehinderten monosubstituierten Aminosäure, (c) 2 bis etwa 20 Gew.% einer tertiären Aminosäure, wobei die Aminosäuren durch die allgemeinen Formeln definiert sind:

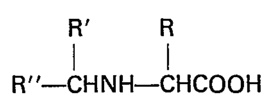

(sterisch gehinderte monosubstituierte Aminosäure)

und

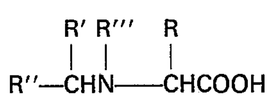

(tertiäre Aminosäure)

wobei R entweder Wasserstoff oder Methyl ist, R' und R'' jeweils Alkyl- oder substituierte Alkylreste mit 1 bis 5 Kohlenstoffatomen sind und R''' ein linearer Alkyl- oder substituierter linearer Alkylrest mit 1 bis 6 Kohlenstoffatomen ist, und (d) Wasser.

9. Absorptionszusammensetzung gekennzeichnet durch: (a) 20 bis 30 Gew.% Kaliumcarbonat, (b) 5 bis etwa 10 Gew.% N-sek.-Butylglycin, (c) 5 bis etwa 10 Gew.% N-Methyl-N-sek.-butylglycin und Wasser.

10. Zusammensetzung nach Anspruch 8 oder 9, dadurch gekennzeichnet, daß die Zusammensetzung ein oder mehrere Antischaummittel, Antioxydantien oder Korrosionsinhibitoren enthält.

VAPOR LIQUID EQUILIBRIUM ISOTHERMS FOR AMINE-PROMOTED $K_2CO_3$
ILLUSTRATING CALCULATION OF THE THERMODYNAMIC CYCLIC CAPACITY

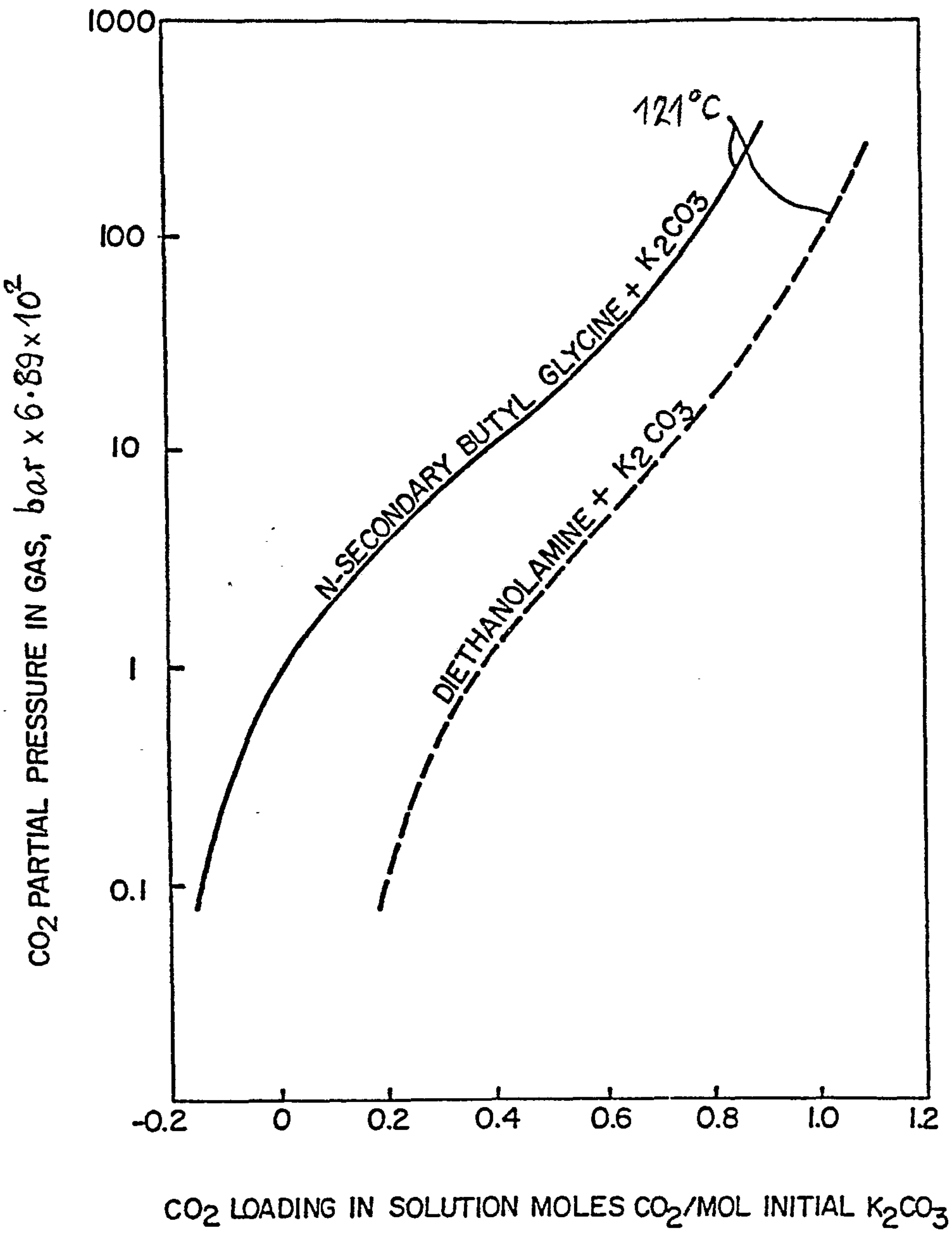


FIG. 1

VAPOR-LIQUID EQUILIBRIUM ISOTHERMS FOR AMINE-PROMOTED $K_2CO_3$
ILLUSTRATING CALCULATION OF THE THERMODYNAMIC CYCLIC CAPACITY

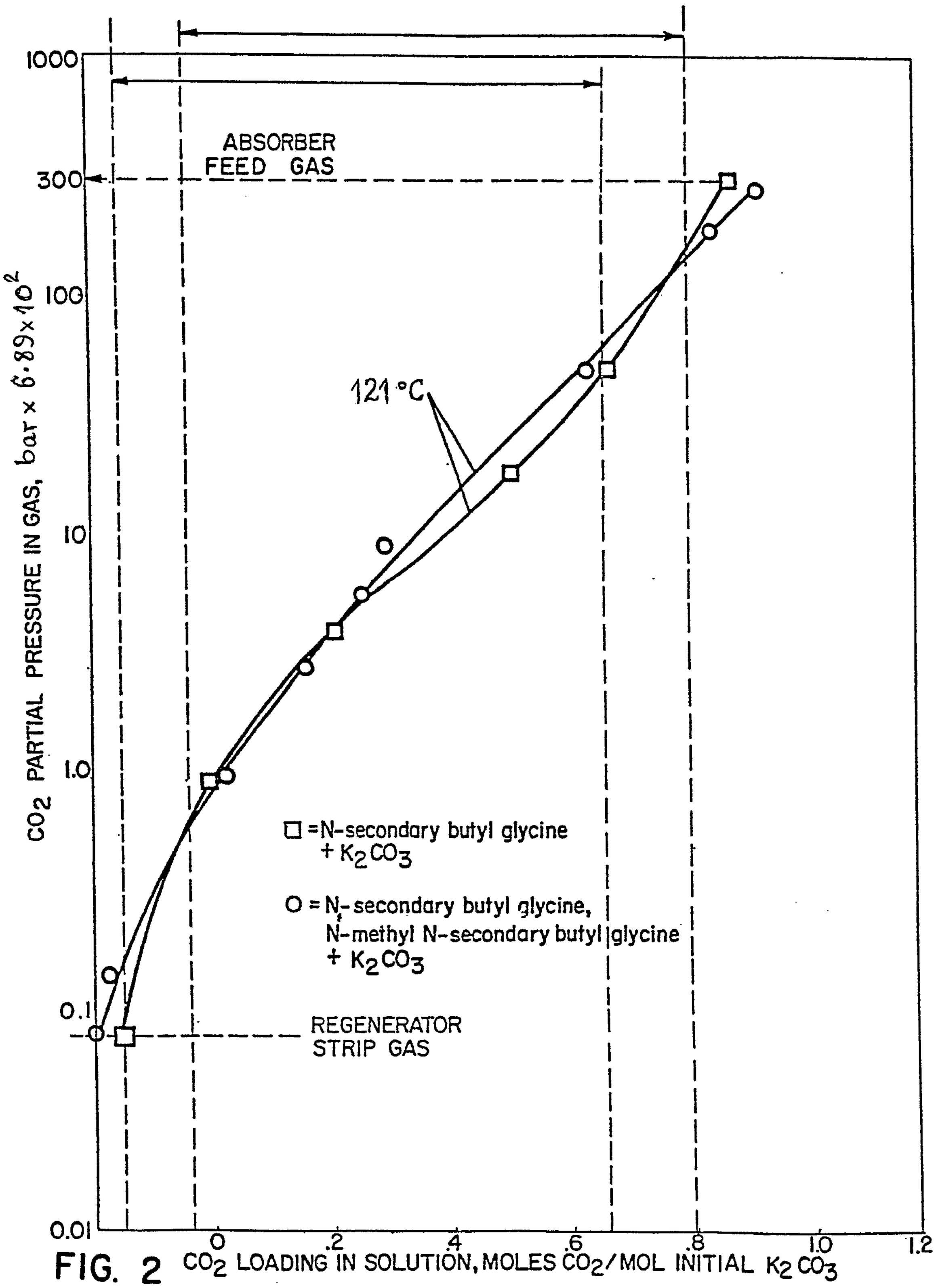


FIG. 2